# EUROPEAN PATENT APPLICATION

(11) **EP 4 700 851 A2**
(43) Date of publication of application: **25.02.2026**
(21) Application number: 25196987.9
(22) Date of filing: 20.08.2025
(51) Int. Cl.: H01M 4/134, H01M 4/1395, H01M 4/36, H01M 4/38, H01M 10/052, H01M 10/0525, H01M 10/0565, H01M 10/42, H01M 50/457, H01M 50/46

(54) **LITHIUM METAL BATTERY AND METHOD OF FABRICATING THE SAME**

(30) Priority: 21.08.2024 KR 20240111847
(71) Applicant: SAMSUNG SDI CO., LTD., Yongin-si, Gyeonggi-do 17084 (KR); Industry-Academic Cooperation Foundation Dankook University, Yongin-si, Gyeonggi-do 16890 (KR)
(72) Inventor: YANG, Hosung, 17084 Yongin-si (KR); YOU, Duckjae, 17084 Yongin-si (KR); PARK, Changwon, 17084 Yongin-si (KR); WOO, JiYe, 17084 Yongin-si (KR); YUK, Seoyeon, 17084 Yongin-si (KR); LEE, Byoung-Sun, 16903 Yongin-si (KR); KU, Eunmo, 16889 Yongin-si (KR)
(74) Representative: Maiwald GmbH

(57) **Abstract**

Disclosed are lithium metal batteries, and fabrication methods thereof. The lithium metal battery includes a negative electrode current collector, a protection layer on the negative electrode current collector and including a porous carbon structure and lithiophilic particles dispersed in the porous carbon structure, a composite separation layer on the protection layer and including a separator and a lithiophobic metal layer on the separator, and a positive electrode on the composite separation layer. The positive electrode includes a positive electrode current collector and a positive electrode active material layer. The positive electrode active material layer includes a positive electrode active material represented by LiₐNi_{1-b-c}Co_{b}X_{c}O_{2-d}, where 0.90≤a≤1.8, 0≤b≤0.2, 0≤c≤0.2, 0.8≤1-b-c≤0.99, and 0≤d≤0.2, and X includes at least one of Al, Mn, or a combination thereof.

## Description

### BACKGROUND

The present disclosure relates to a lithium metal battery, and a method of fabricating the lithium metal battery, and more particularly, to a lithium metal battery including a high-capacity positive electrode and a method of fabricating the lithium metal battery.

A carbon-based negative electrode active material such as graphite is typically utilized in lithium batteries currently commercially available. The carbon-based negative electrode active material typically exhibits no volume change during charge and discharge, which improves stability of lithium batteries, but has a low capacity, and as a result there may be a demand for a negative electrode active material with higher capacity.

As the negative electrode active material, lithium metal having a theoretical electrical capacity that is substantially larger than the theoretical electrical capacity of the carbon-based negative electrode active material. During charge and discharge, lithium metal may undergo a side reaction with the electrolyte to form dendrites on a surface of the lithium metal, and the dendrites may grow to induce a short circuit between positive and negative electrodes. As a result, there may be a decrease in lifespan characteristics of a lithium metal battery including the lithium metal.

### SUMMARY

Some example embodiments of the present disclosure include a high-capacity lithium metal battery that reduces or suppresses lithium dendrites and has desired or improved lifespan characteristics.

Some embodiments of the present disclosure provides a method of fabricating a high-capacity lithium metal battery that reduces or suppresses lithium dendrites and has desired or improved lifespan characteristics.

According to some example embodiments of the present disclosure, a lithium metal battery may include a negative electrode current collector; a protection layer on the negative electrode current collector, wherein the protection layer includes a porous carbon structure and a plurality of lithiophilic particles dispersed in the porous carbon structure; a composite separation layer on the protection layer, wherein the composite separation layer includes a separator and a lithiophobic metal layer on a first surface of the separator, wherein the lithiophobic metal layer faces the protection layer; and a positive electrode on the composite separation layer. The positive electrode may include a positive electrode current collector and a positive electrode active material layer on the positive electrode current collector. The positive electrode active material layer may include a positive electrode active material represented by LiₐNi_{1-b-c}Co_{b}X_{c}O_{2-d} (where 0.90≤a≤1.8, 0≤b≤0.2, 0≤c≤0.2, 0.8≤1-b-c≤0.99, and 0≤d≤0.2). X may be or include at least one of Al, Mn, or a combination thereof.

According to some example embodiments of the present disclosure, a lithium metal battery may include a negative electrode; a positive electrode; an electrolyte layer between the negative electrode and the positive electrode; and a composite separation layer impregnated in the electrolyte layer. The negative electrode may include a negative electrode current collector and a protection layer on the negative electrode current collector. The composite separation layer may include a separator and a lithiophobic metal layer on a first surface of the separator. The lithiophobic metal layer may face the protection layer. The protection layer may include a porous carbon structure and a plurality of lithiophilic particles dispersed in the porous carbon structure. The electrolyte layer may include a gel-polymer electrolyte.

According to some example embodiments of the present disclosure, a method of fabricating a lithium metal battery may include preparing a composite separation layer by forming a lithiophobic metal layer on a first surface of a separator; preparing a protection layer by performing an electrospinning process that uses a mixing solution of a polymer and a metal precursor compound; forming a stack by stacking, e.g., sequentially stacking, a negative electrode current collector, the protection layer, the composite separation layer, and a positive electrode; providing the stack with an electrolyte solution, wherein the composite separation layer is impregnated in the electrolyte solution; and thermally cross-linking the electrolyte solution to form an electrolyte layer.

### BRIEF DESCRIPTION OF DRAWINGS

FIG. 1 illustrates a simplified conceptual diagram showing a lithium metal battery according to some example embodiments of the present disclosure.
FIGS. 2 and 3 illustrate enlarged cross-sectional views showing section M of FIG. 1.
FIG. 4 illustrates a simplified conceptual diagram showing a cross-linked polymer structure according to some example embodiments of the present disclosure.
FIGS. 5 to 7 illustrate conceptual diagrams showing a lithium metal battery according to some example embodiments of the present disclosure.
FIGS. 8A to 8E illustrate cross-sectional views showing a method of fabricating a lithium metal battery according to some example embodiments of the present disclosure.
FIG. 9 illustrates a photograph comparing a composite separation layer of Embodiment 1 with a separator of Comparative 1.
FIG. 10 illustrates an image showing a surface analysis result of a protection layer in Embodiment 1.
FIG. 11 illustrates a graph showing positive electrode capacities and Coulombic efficiencies of Embodiment 1 and Comparative 1.
FIG. 12 illustrates a graph showing positive electrode capacities and Coulombic efficiencies of Embodiment 2 and Comparative 2.
FIG. 13 illustrates an image comparing a negative electrode of Embodiment 1 with a negative electrode of Comparative 1 after cycles.
FIG. 14 is a flow chart illustrating a method of fabricating a lithium metal battery, according to an example embodiment.

### DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be "directly on" the other element, or intervening elements may be present therebetween. In the drawings, thicknesses of some components may be exaggerated for more effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

In this description, the term "metal" may include metals or metalloids, such as silicon and germanium, in an elemental or ionic state.

In this description, the term "alloy" may refer to a mixture of two or more metals.

In this description, the term "positive electrode active material" may refer to a positive electrode material capable of undergoing lithiation and delithiation.

In this description, the term "negative electrode active material" may refer to a negative electrode material capable of undergoing lithiation and delithiation.

In this description, the terms "lithiation" and "to lithiate" may refer to a process of adding lithium to a positive electrode active material or a negative electrode active material.

In this description, the terms "delithiation" and "to delithiate" may refer to a process of removing lithium from a positive electrode active material or a negative electrode active material.

In this description, the terms "charge" and "to charge" may refer to process of providing electrochemical energy to a battery.

In this description, the terms "discharge" and "to discharge" may refer to a process of removing electrochemical energy from a battery.

In this description, the term "positive electrode" may refer to an electrode in which electrochemical reduction and lithiation occur during a discharge process.

In this description, the term "negative electrode" may refer to an electrode in which electrochemical oxidation and delithiation occur during a discharge process.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

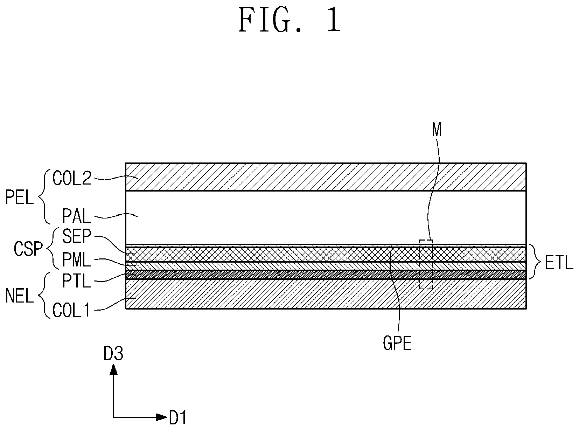

FIG. 1 is a simplified conceptual diagram illustrating a lithium metal battery according to some example embodiments of the present disclosure. Referring to FIG. 1, a lithium metal battery may include a positive electrode PEL, a negative electrode NEL, a separator SEP, and an electrolyte layer ETL.

Lithium metal may be included as a negative electrode active material in the lithium metal battery. In the lithium metal battery, a lithium-including metal layer may be precipitated or dissolved during a charge and discharge process. The lithium-including metal layer may be formed on a top surface of a negative electrode current collector COL1 and in a negative host layer NHL which is discussed below. A repetition of charge and discharge of the lithium metal battery may cause the lithium-including metal layer to include impurities remaining in an electrode and deposition products of an electrolyte.

As the lithium-including metal layer includes such impurities, the lithium-including metal layer may have a substantially rough and hard surface thereof. A lithium dendrite may be precipitated on the lithium-including metal layer having the rough surface. During a charge and discharge process, the lithium dendrite may substantially continuously grow to induce a short circuit between the positive electrode PEL and the negative electrode NEL. Additionally, during charge, uneven dendrite growth of lithium on the negative electrode NEL may readily cause damage within a cell, and may cause significant expansion of a cell volume, which may result in a challenge for long-term operation.

The positive electrode PEL and the negative electrode NEL may be spaced apart from each other across the separator SEP. The separator SEP may be disposed between the positive electrode PEL and the negative electrode NEL. The separator SEP may have an electrolyte impregnated therein. In an example embodiment, an electrolyte may also be impregnated in the positive electrode PEL and the negative electrode NEL in addition to the separator SEP. In an example embodiment, the electrolyte layer ETL may impregnate not only the separator SEP, but also the positive electrode PEL and the negative electrode NEL.

The electrolyte layer ETL may be a medium by which lithium ions are transferred between the positive electrode PEL and the negative electrode NEL. The lithium ions in the electrolyte layer ETL may pass through the separator SEP to move toward the positive electrode PEL or the negative electrode NEL.

### Negative Electrode NEL

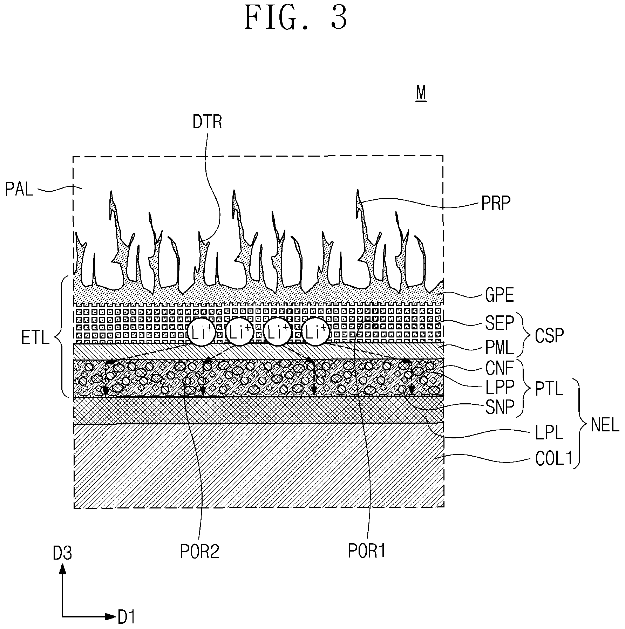

Referring to FIG. 1, the negative electrode NEL for the lithium metal battery may include a negative electrode current collector COL1 and a protection layer PTL on the negative electrode current collector COL1. The negative electrode current collector COL1 may provide a reference surface on which a lithium deposition layer LPL illustrated in FIG. 3 is formed which is discussed below. The negative electrode current collector COL1 may include a material that does not substantially react with lithium, for example, a material that does not form an alloy or a compound with lithium. For example, the negative electrode current collector COL1 may include at least one of copper (Cu), stainless steel, titanium (Ti), iron (Fe), cobalt (Co), and nickel (Ni). The negative electrode current collector COL1 may have a thickness in a range of from about 1 µm to about 20 µm, for example, about 5 µm to about 15 µm or about 7 µm to about 10 µm.

The negative electrode current collector COL1 may be formed of or include one of the metals mentioned above, an alloy of two or more of the metals mentioned above, or a coating material. The negative electrode current collector COL1 may have, for example, a plate or foil shape. In an example embodiment, the negative electrode current collector COL1 may be omitted.

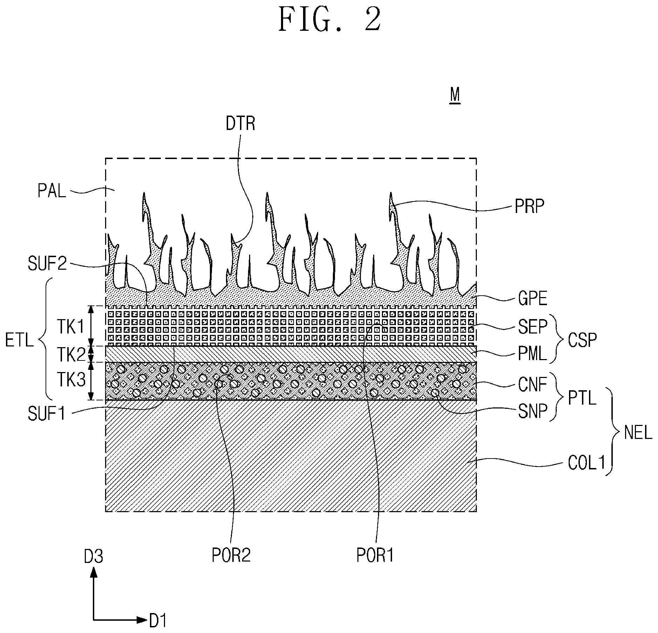

FIGS. 2 and 3 illustrate enlarged cross-sectional views showing section "M" of FIG. 1. Referring to FIGS. 1 and 2, the protection layer PTL may include a porous carbon structure CNF and lithiophilic particles SNP dispersed in the porous carbon structure CNF.

The porous carbon structure CNF may include carbon. For example, the porous carbon structure CNF may include a three-dimensional structured carbon nano-fiber. The porous carbon structure CNF may include second pores POR2 therein. The porous carbon structure CNF may have a porosity in a range of from about 40% to about 80% or about 50% to about 80%. The second pores POR2 of the porous carbon structure CNF may be substantially filled with a gel-polymer electrolyte GPE which is discussed below.

The lithiophilic particles SNP may include lithiophilic metal. The lithiophilic metal may include metal with high affinity for lithium. The lithiophilic metal may effectively adsorb lithium ions onto a surface thereof. The lithiophilic metal may assist a substantial uniform electrodeposition of lithium. The lithiophilic particles SNP may include at least one of silver (Ag), gold (Au), copper (Cu), tin (Sn), and bismuth (Bi). For example, the lithiophilic particles SNP may be or include silver nano-particles.

The protection layer PTL may have a thickness TK3 in a range of from about 1 µm to about 100 µm, or about 1 µm to about 50 µm. When the thickness TK3 of the protection layer PTL is increased, a larger quantity of lithium ions may be accommodated to increase a battery energy density and capacity. However, when the thickness TK3 of the protection layer PTL is greater than about 100 µm, battery resistance and impedance may be increased, which may reduce overall efficiency.

The lithiophilic particles SNP in the protection layer PTL may induce a provisional coupling of lithium ions during charge and discharge of the lithium metal battery, thereby assisting in the electrodeposition of lithium metal.

The lithiophilic particles SNP may be or include lithium-miscible inorganic materials to assist in the electrodeposition of lithium in the porous carbon structure CNF. The lithiophilic particles SNP may reduce, suppress, or delay growth of dendrites.

The lithiophilic particles SNP may act as seeds that form a solid solution with lithium during lithium deposition, and reduce an interface energy to promote a substantially uniform lithium distribution.

Referring to FIG. 3, in the lithium metal battery, a lithium deposition layer LPL may be formed after operation of an initial cycle. After the initial cycle, the negative electrode NEL of the lithium metal battery may further include the lithium deposition layer LPL. The lithium deposition layer LPL may be interposed between the negative electrode current collector COL1 and the electrolyte layer ETL, which is discussed below.

The charge of the lithium metal battery may plate (or electroplate) lithium metal on the negative electrode current collector COL1, which may result in the formation of the lithium deposition layer LPL illustrated in FIG. 3. The lithium deposition layer LPL may include lithium metal or lithium alloy. The lithium alloy may be or include an alloy of lithium, and a metal that can be alloyed with lithium. For example, the lithium alloy may include at least one of a lithium-silver alloy, a lithium-zinc alloy, a lithium-magnesium alloy, or a lithium-tin alloy.

The lithium deposition layer LPL may have a thickness that is, for example, equal to or less than about 50 µm, equal to or less than about 40 µm, equal to or less than about 35 µm, equal to or less than about 30 µm, about 1 µm to about 50 µm, about 1 µm to about 40 µm, about 5 µm to about 40 µm, about 1 µm to about 35 µm, or about 10 µm to about 35 µm. As the thickness of the lithium deposition layer LPL falls within the ranges above, the lithium metal battery may have an improved energy density.

According to an example embodiment, the lithium deposition layer LPL at maximum charge may have a thickness that is equal to or less than about 35 µm, equal to or less than about 30 µm, equal to or less than about 28 µm, about 10 µm to about 35 µm, about 10 µm to about 30 µm, or about 10 µm to about 28 µm.

Referring back to FIG. 3, lithium may be plated (or electroplated) not only on the lithium deposition layer LPL, but also in the protection layer PTL. Thus, plated lithium LPP may be formed in the protection layer PTL. As discussed above, the porous carbon structure CNF may include a plurality of second pores POR2. Thus, the porous carbon structure CNF of the protection layer PTL may provide a space where lithium is plated (or electroplated) when the lithium metal battery is charged.

The protection layer PTL may be configured as a host layer. The protection layer PTL may reduce or suppress the formation of the lithium deposition layer LPL. Thus, the protection layer PTL may reduce or suppress a lithium dendrite and an increase in volume of the battery caused by the formation of the lithium deposition layer LPL.

### Electrolyte Layer ETL

Referring back to FIG. 1, the electrolyte layer ETL according to some example embodiments of the present disclosure may include at least one of a liquid electrolyte, a solid electrolyte, a gel electrolyte, or a combination thereof.

In an example embodiment, the electrolyte layer ETL may be a liquid electrolyte layer. The liquid electrolyte layer may include an organic electrolyte solution. The organic electrolyte solution may include an organic solvent and a lithium salt. Any suitable material may be chosen without limitation as long as the material is commonly included as an organic solvent in the relevant technical field. For example, the organic solvent may include at least one of propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, γ-butyrolactone, dioxolane, 4-methyl dioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

Likewise, any suitable material may be chosen without limitation as long as the material is commonly used as a lithium salt in the relevant art. For example, the lithium salt may include at least one of LiSCN, LiN(CN)₂, Li(CF₃SO₂)₃C, Li(FSO₂)₂N(LiFSI), LiC₄F₉SO₃, LiN(SO₂CF₂CF₃)₂, LiPF₃(C₂F₅)₃, LiCl, LiF, LiBr, LiI, LiB(C₂O₄)₂, LiPF₆, LiPF₃(CF₃), LiPF₅(C₂F₅), LiPF₅(C₃F₇), LiPF₄(CF₃)₂, LiPF₄(CF₃)(C₂F₅), LiPF₃(CF₃)₃, LiPF₃(CF₂CF₃)₃, LiPF₄(C₂O₄)₂, LiBF₄, LiBF₃(C₂F₅), lithium bis(oxalato) borate (LiBOB), lithium oxalyl difluoroborate (LIODFB), lithium difluoro(oxalato)borate (LiDFOB), lithium bis(trifluoromethanesulfonyl)imide (LiTFSI, LiN(SO₂CF₃)₂), lithium bis(fluorosulfonyl)imide (LiFSI, LiN(SO₂F)₂), LiN(SO₂C₂F₅)₂, LiCF₃SO₃, LiAsF₆, LiSbF₆, LiClO₄, or any combination thereof.

For example, a concentration of the lithium salt may range from about 0.1 M to about 5.0 M.

In an example embodiment, the electrolyte layer ETL may be or include a solid electrolyte layer. The solid electrolyte layer may include a solid polymer electrolyte. The solid polymer electrolyte may include a mixture of lithium salt and polymer, or a polymer having an ion conductive functional group. The solid polymer electrolyte may be in a solid state at about 25°C under about 1 atm. The solid polymer electrolyte may include substantially no liquid. A polymer in the solid polymer electrolyte may include, for example, at least one of polyethylene oxide (PEO), polyvinylidene fluoride (PVDF), polyvinylidene fluoride-hexafluoropropylene (PVDF-HFP), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylene dioxythiophene (PEDOT), polypyrrole (PPY), polyaniline, polyacetylene, Nafion^{™}, Aquivion^{™}, Flemion^{™}, Gore^{™}, Aciplex^{™}, Morgane^{™} ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi⁺), or a combination thereof. The polymer in the solid polymer electrolyte is not limited thereto, and any suitable material may be chosen without limitation as long as the material is commonly used in a solid polymer electrolyte in the relevant art.

The lithium salt in the solid polymer electrolyte may be chosen from those discussed above.

The polymer in the solid polymer electrolyte may include repeating units, a number of the repeating units is equal to or greater than about 10, equal to or greater than about 20, equal to or greater than about 50, or equal to or greater than about 100. For example, the polymer in the solid polymer electrolyte may have a weight average molecular weight that is equal to or greater than about 1,000 Daltons, equal to or greater than about 10,000 Daltons, equal to or greater than about 100,000 Daltons, or equal to or greater than about 1,000,000 Daltons.

In an example embodiment, the electrolyte layer ETL may be or include a gel-polymer electrolyte layer (see GPE of FIG. 3). The gel-polymer electrolyte GPE may have a gel state or semi-solid state. The gel-polymer electrolyte GPE may include a liquid electrolyte and a polymer, or an organic solvent and a polymer that has an ion conductive functional group. The gel-polymer electrolyte GPE may be in a gel state or a semi-solid state at about 25°C under about 1 atm.

For example, the gel-polymer electrolyte GPE may have a gel state that does not include a liquid. The liquid electrolyte included in the gel-polymer electrolyte GPE may be a mixture of a lithium salt and an organic solvent, a mixture of an ionic liquid and an organic solvent, or a mixture of an ionic liquid, a lithium salt, and an organic solvent.

The polymer in the gel-polymer electrolyte GPE may be or include at least one of those discussed above with respect to the solid polymer electrolyte. The organic solvent in the gel-polymer electrolyte GPE may be or include at least one of those discussed above with respect to the liquid polymer electrolyte. The lithium salt in the gel-polymer electrolyte GPE may be or include at least one of those discussed above with respect to the liquid polymer electrolyte.

The ionic liquid in the gel-polymer electrolyte GPE may refer to a salt in a liquid state at room temperature, or a molten salt at room temperature that consists of, or includes, only ions having a melting point equal to or below room temperature. The ionic liquid may include at least one cation such as at least one of ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, and triazolium-based cations, and at least one anion such as at least one of BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br, I⁻, BF₄⁻, SO₄⁻, CF₃SO₃⁻, (FSO₂)₂N⁻, (C₂F₅SO₂)₂N⁻, (C₂F₃SO₂)(CF₃SO₂)N⁻,, and (CF₃SO₂)₂N⁻.

In an example embodiment, the solid polymer electrolyte may be impregnated into the liquid electrolyte, forming the gel-polymer electrolyte GPE.

In an example embodiment, the gel-polymer electrolyte GPE may further include an inorganic particle.

In an example embodiment, the polymer in the gel-polymer electrolyte GPE may include repeating units, a number of the repeating units is equal to or greater than about 10, equal to or greater than about 20, equal to or greater than about 50, or equal to or greater than about 100. For example, the polymer in the gel-polymer electrolyte GPE may have a weight average molecular weight that is equal to or greater than about 500 Daltons, equal to or greater than about 1,000 Daltons, equal to or greater than about 10,000 Daltons, equal to or greater than about 100,000 Daltons, or equal to or greater than about 1,000,000 Daltons.

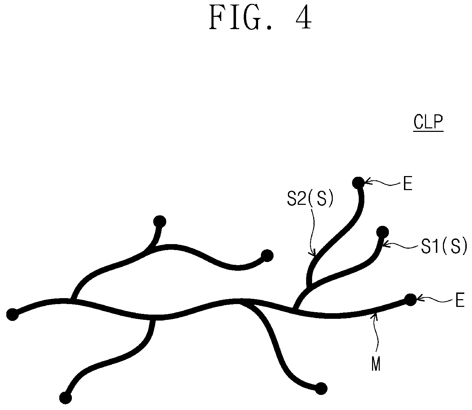

In an example embodiment, the polymer in the gel-polymer electrolyte GPE may include a cross-linked polymer (see CLP of FIG. 4). FIG. 4 is a simplified conceptual diagram illustrating a cross-linked polymer structure according to some example embodiments of the present disclosure. Referring to FIG. 4, the cross-linked polymer CLP may include a main chain M, and a plurality of side chains S that extend from the main chain M. For example, the plurality of side chains S may include a side chain S1 that extends from the main chain M and a side chain S2 that extends from the side chain S1. In addition, the main chain M, and the plurality of side chains S of the cross-linked polymer CLP may each include a terminal end E where a cross-linking or polymerization reaction is terminated.

The cross-linked polymer CLP may be formed by a cross-linking reaction of a multifunctional polymerizable monomer or a cross-linking agent. For example, the cross-linked polymer CLP may include a repeating unit derived from the cross-linking agent. The cross-linking agent may be or include a material that is electrochemically stable at an operating environment of a positive electrode (e.g., at a voltage of about 4.3 V or higher) using a positive electrode active material in which nickel is present in an amount that is equal to or greater than about 90 mol%.

In an example embodiment, the cross-linking agent may include a functional group capable of undergoing a cross-linking reaction. For example, the cross-linking agent may include two or more double-bond functional groups, and for example, the double-bond functional group may be or include a (meth)acrylic group.

In an example embodiment, the cross-linking agent may include at least one of pentaerythritol tetraacrylate, pentaerythritol tetramethacrylate, trimethylolpropane triacrylate, trimethylolpropane trimethacrylate (TMPTMA), propoxylated (3) trimethylolpropane triacrylate (PO(3)TMPTA), propoxylated (6) trimethylolpropane triacrylate (PO(6)TMPTA), ethoxylated trimethylolpropane triacrylate, di(trimethylolpropane) tetraacrylate, pentaerythritol triacrylate (PETA), propoxylated glyceryl triacrylate, tris(2-hydroxyethyl) isocyanurate triacrylate (THEICTA), and dipentaerythritol pentaacrylate (DPEPA).

The cross-linking agent may have a weight average molecular weight in a range of from about 200 to about 2,000, for example, about 200 to about 1,000, or about 200 to about 500. When the weight average molecular weight is less than about 200, a cross-linking point density in a molecular structure of the polymer after cross-link may be substantially high and may create a hindrance of free movement of the lithium ion, and when the weight average molecular weight is greater than about 200, a cross-linking point density in a molecular structure of the polymer after cross-link may be substantially low and may reduce a capability of electrolyte blocking.

The cross-linked polymer CLP may further include a repeating unit derived from an ionic monomer. The ionic monomer may include at least one double-bond functional group and an ionic functional group.

The double-bond functional group of the ionic monomer may include an allyl group, an acryl group, a vinyl group, or any arbitrary combination thereof. For example, the ionic monomer may include an acryl group, a vinyl group, or any arbitrary combination thereof. The ionic functional group of the ionic monomer may include a cationic functional group, an anionic functional group, or a combination thereof. For example, when the ionic monomer includes a cationic functional group, the ionic monomer may be or include a cationic monomer. For example, when the ionic monomer includes an anionic functional group, the ionic monomer may be or include an anionic monomer. For example, when the ionic monomer includes both a cationic functional group and an anionic functional group, the ionic monomer may be or include a zwitterionic monomer.

In an example embodiment, the polymer in the gel-polymer electrolyte GPE may further include a linear polymer. The linear polymer may include at least one of polyethylene (PE), styrene-butadiene rubber (SBR), nylon, carboxymethyl cellulose (CMC), polyethylene oxide (PEO), polyvinylidenefluoride (PVDF), vinylidenefluoride-hexafluoropropylene (PVDF-HFP), poly(styrene-b-polyethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), polyethylene glycol (PEG), polyacrylonitrile (PAN), polytetrafluoroethylene (PTFE), polyethylene dioxythiophene (PEDOT), polypyrrole (PPY), polyaniline, polyacetylene, or a combination thereof.

In an example embodiment, the linear polymer may be present in an amount that is equal to or less than about 20 wt% relative to 100 wt% of the polymer in the gel-polymer electrolyte GPE. For example, the amount of the linear polymer may range from about 1 wt% to about 20 wt%, from about 5 wt% to about 20 wt%, from about 10 wt% to about 20 wt%, or from about 10 wt% to about 15 wt%. When the amount of the linear polymer falls within the range above, the gel-polymer electrolyte GPE may have improved ionic conductivity while maintaining mechanical stability. When the amount of the linear polymer is greater than the range above, the gel-polymer electrolyte GPE may have poor mechanical stability.

In an example embodiment, the polymer in the gel-polymer electrolyte GPE may be present in an amount in a range of from about 1 wt% to about 10 wt%, about 2 wt% to about 8 wt%, or about 3 wt% to about 7 wt% relative to the total 100 wt% of the electrolyte layer ETL. The liquid electrolyte may be present in an amount in a range of from about 90 wt% to about 99 wt%, about 92 wt% to about 98 wt%, or about 93 wt% to about 97 wt% relative to the total 100 wt% of the electrolyte layer ETL.

In another example embodiment, the polymer in the gel-polymer electrolyte GPE may be present in a total amount that is equal to or less than about 5 wt% relative to the total 100 wt% of the electrolyte layer ETL. For example, the total amount of the polymer may range from about 0.1 wt% to about 5 wt%, from about 0.5 wt% to about 5 wt%, from about 1 wt% to about 5 wt%, or from about 1 wt% to about 3 wt%. The liquid electrolyte may be present in an amount that is equal to or greater than about 95 wt% relative to the total 100 wt% of the electrolyte layer ETL. For example, the amount of the liquid electrolyte may range from about 95 wt% to about 99.9 wt%, from about 95 wt% to about 99.5 wt%, from about 95 wt% to about 99 wt%, or from about 95 wt% to about 97 wt%.

In another example embodiment, the polymer in the gel-polymer electrolyte GPE may be present in a total amount that is equal to or less than about 60 wt% relative to the total 100 wt% of the electrolyte layer ETL. For example, the total amount of the polymer may range from about 60 wt% to about 90 wt%, from about 60 wt% to about 80 wt%, from about 65 wt% to about 80 wt%, or from about 70 wt% to about 80 wt%. The liquid electrolyte may be present in an amount that is equal to or less than about 40 wt% relative to the total 100 wt% of the electrolyte layer ETL. For example, the amount of the liquid electrolyte may range from about 10 wt% to about 40 wt%, from about 20 wt% to about 40 wt%, from about 20 wt% to about 35 wt%, or from about 20 wt% to about 30 wt%.

In an example embodiment, a composite separation layer CSP and a protection layer PTL may be impregnated in the electrolyte layer ETL. For example, a first pore POR1 of the separator SEP may be filled with the gel-polymer electrolyte GPE (see FIG. 2). The second pore POR2 of the protection layer PTL may be filled with the gel-polymer electrolyte GPE (see FIG. 2).

### Composite Separation Layer CSP

Referring to FIGS. 1 and 2, the composite separation layer CSP may be provided between the positive electrode PEL and the negative electrode NEL. The composite separation layer CSP may include the separator SEP and a lithiophobic metal layer PML on a first surface SUF1 of the separator SEP.

The separator SEP may have a first surface SUF1 and a second surface SUF2, as illustrated in FIG. 2. The first surface SUF 1 and the second surface SUF2 may be opposite to each other. The first surface SUF 1 of the separator SEP may face the negative electrode NEL. The second surface SUF2 of the separator SEP may face the positive electrode PEL.

The separator SEP may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator SEP may include a porous substrate. The porous substrate may be or include a polymer layer including one of polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon^{™}, and polytetrafluoroethylene, or may be a copolymer or mixture including two or more of the materials mentioned above.

The separator SEP may have a porosity in a range of from about 40% to about 80%. For example, the porosity of the separator SEP may range from about 40% to about 70% or from about 50% to about 70%. The separator SEP may have a thickness TK1 in a range of from about 2 µm to about 40 µm. For example, the thickness TK1 of the separator SEP may range from about 2 µm to about 40 µm, from about 3 µm to about 30 µm, from about 3 µm to about 15 µm, from about 3 µm to about 12 µm, from about 5 µm to about 12 µm, or from about 5 µm to about 10 µm. When the thickness TK1 of the separator SEP is greater than the range above, a resistance may be increased due to an increase in migration paths of lithium ions. When the thickness TK1 of the separator SEP is less than the range above, a short circuit may occur due to a lack of, or weakness of, mechanical properties.

The lithiophobic metal layer PML may be selectively provided on the first surface SUF 1 but not the second surface SUF2 of the separator SEP. The lithiophobic metal layer PML may be in contact with the protection layer PTL. The lithiophobic metal layer PML may be spaced apart from the positive electrode PEL across the separator SEP.

The lithiophobic metal layer PML may include a lithiophobic metal. The lithiophobic metal may be a metal with low affinity for lithium. Lithium may be barely adsorbed on a surface of the lithiophobic metal. A high voltage may be advantageous when lithium is plated (or electroplated) on the lithiophobic metal. The lithiophobic metal layer PML may include at least one of platinum (Pt), aluminum (Al), nickel (Ni), and iron (Fe). For example, the lithiophobic metal layer PML may include platinum (Pt).

The lithiophobic metal layer PML may have a thickness TK2 that is less than the thickness TK1 of the separator SEP. For example, the thickness TK2 of the lithiophobic metal layer PML may range from about 10 nm to about 100 nm, but the present disclosure is not limited thereto.

In an example embodiment, the lithiophobic metal layer PML may be formed by performing a sputtering process on the first surface SUF 1 of the separator SEP. In another embodiment, the lithiophobic metal layer PML may be formed by performing a plating process on the first surface SUF1 of the separator SEP.

The lithiophobic metal layer PML may be configured to guide lithium ions to migrate in a horizontal direction rather than a vertical direction. The lithiophobic metal layer PML may limit a plated position of lithium to reduce or suppress the formation of dendrite.

### Positive Electrode PEL

Referring again to FIG. 1, the positive electrode PEL of the lithium metal battery may include a positive electrode current collector COL2 and a positive electrode active material layer PAL formed on the positive electrode current collector COL2. The positive electrode active material layer PAL may include a positive electrode active material, and may further include a binder and/or a conductive material. For example, the positive electrode active material layer PAL may further include an additive that can be configured as a sacrificial positive electrode.

The positive electrode active material in the positive electrode active material layer PAL may be present in an amount in a range of from about 90 wt% to about 99.5 wt% relative to 100 wt% of the positive electrode active material layer PAL. The binder and the conductive material may each be present in an amount in a range of from about 0.5 wt% to about 5 wt% relative to 100 wt% of the positive electrode active material layer PAL.

The binder may be configured to improve attachment of positive electrode active material particles to each other, and to improve attachment of the positive electrode active material to the positive electrode current collector COL2. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-including polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may be included to provide an electrode with conductivity. Any electrically conductive material may be included as the conductive material unless the conductive material causes a chemical change. The conductive material may include, for example, a carbon-based material such as at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The positive electrode current collector COL2 may provide a reference surface on which the positive electrode active material layer PAL is disposed. For example, the positive electrode current collector COL2 may include at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive electrode current collector COL2 may have a plate or foil shape. In another example embodiment of the present disclosure, the positive electrode current collector COL2 may be omitted. The positive electrode current collector COL2 may have a thickness in a range of, for example, from about 1 µm to about 100 µm, about 1 µm to about 50 µm, about 5 µm to about 25 µm, or about 10 µm to about 20 µm. In an example embodiment, the positive electrode current collector COL2 may include aluminum (Al), but the present disclosure is not limited thereto.

The positive electrode active material in the positive electrode active material layer PAL may include a compound (e.g., lithiated intercalation compound) that can reversibly intercalate and deintercalate lithium. For example, the positive electrode active material may include at least one kind of composite oxide including lithium and metal that is or includes at least one of cobalt, manganese, nickel, and a combination thereof.

The composite oxide may include a lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O_{2-α}D_{α} (where 0.90≤a≤1.8, 0≤b≤0.5, 0≤c≤0.5, and 0<α<2); LiₐNi_{1-3-c}Mn₃X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0 ≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤ 1.8 and 0.001≤b≤0.1); LiₐMn₁₋₃G₃O₂ (where 0.90≤a≤ 1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); LiₐFePO₄ (where 0.90≤a≤1.8).

In the chemical formulae above, A may be or include at least one of Ni, Co, Mn, or a combination thereof, X may be or include at least one of Al, Ni, Co, Mn, Cr, Fe, Mg, Sr, V, a rare-earth element, or a combination thereof, D may be or include at least one of O, F, S, P, or a combination thereof, G may be or include at least one of Al, Cr, Mn, Fe, Mg, La, Ce, Sr, V, or a combination thereof, and L¹ may be or include at least one of Mn, Al, or a combination thereof.

A coating layer may be additionally added on a surface of the compound discussed above. The coating layer may include, for example, at least one of oxide, hydroxide, oxyhydroxide, oxycarbonate, or hydroxycarbonate of a coating element. The coating layer may be amorphous or crystalline. The coating element included in the coating layer may be or include at least one of Mg, Al, Co, K, Na, Ca, Si, Ti, V, Sn, Ge, Ga, B, As, and Zr. A method for forming the coating layer may be one of any methods that do not adversely affect physical characteristics of the positive electrode active material. The method of forming the coating layer may include, for example, spray coating or immersion.

For example, the positive electrode active material may be or include a high-nickel-based positive electrode active material having a nickel amount that is equal to or greater than about 80 mol%, equal to or greater than about 85 mol%, equal to or greater than about 90 mol%, equal to or greater than about 91 mol%, or equal to or greater than about 94 mol% and equal to or less than about 99 mol% relative to 100 mol% of metal devoid of lithium in the lithium transition metal composite oxide. The high-nickel-based positive electrode active material may achieve high capacity, and thus may be applied to a high-capacity and high-density lithium metal battery.

The high-nickel-based positive electrode active material according to an example embodiment of the present disclosure may be represented by LiₐNi_{1-b-c}Co_{b}X_{c}O_{2-d} (where 0.90≤a≤1.8, 0≤b≤0.2, 0≤c≤0.2, 0.8≤1-b-c≤0.99, and 0≤d≤0.2). X may be or include at least one of Al, Mn, or a combination thereof. The high-nickel-based positive electrode active material may have a high capacity that is equal to or greater than about 5.0 mAh/cm².

Referring back to FIG. 2, the positive electrode active material layer PAL may not be flat, but may have an uneven surface. For example, the surface of the positive electrode active material layer PAL may include a plurality of dent regions DTR.

In an example embodiment, the gel-polymer electrolyte GPE of the electrolyte layer ETL may fill all of, or substantially all of, the dent regions DTR of the positive electrode active material layer PAL. For example, the gel-polymer electrolyte GPE may include protrusions PRP that correspondingly substantially fill the dent regions DTR. The dent regions DTR may cause the surface of the positive electrode active material layer PAL to have a relatively large specific area. As the gel-polymer electrolyte GPE includes the protrusions PRP that correspond to the dent regions DTR, there may be an increase in contact area between the gel-polymer electrolyte GPE and the positive electrode active material layer PAL.

Referring to FIG. 3, the lithium deposition layer LPL may be formed from lithium ions when the lithium metal battery is charged. The plated lithium LPP may be formed in the protection layer PTL from the lithium ions when the lithium metal battery is charged. In an example embodiment, the gel-polymer electrolyte GPE that fills the second pore POR2 may cause an incomplete formation of the plated lithium LPP in the second pore POR2, but the present disclosure is not limited thereto.

As the lithiophobic metal layer PML has non-affinity for lithium, lithium ions may disperse and move horizontally rather than vertically. The protection layer PTL may have a three-dimensional nano-fiber structure and affinity for lithium, and thus may assist migration and electrodeposition of lithium ions.

The lithiophobic metal layer PML and the protection layer PTL may associate with each other to generate a synergic effect, and accordingly, the lithium deposition layer LPL may be substantially uniformly formed without the occurrence of dendrite. As a result, the lithium metal battery according to an example of the present disclosure may improve lifespan and reduce or suppress side reactions caused by lithium metal.

According to some example embodiments of the present disclosure, the positive electrode active material layer PAL may have a high capacity. For example, the positive electrode active material layer PAL may have a capacity that is equal to or greater than about 5.0 mAh/cm². The positive electrode active material layer PAL may have a capacity in a range of about 5.0 mAh/cm² to about 10.0 mAh/cm². In an example embodiment, the positive electrode active material layer PAL may include a high-nickel-based positive electrode active material to achieve a high capacity. In an example embodiment, the positive electrode active material layer PAL may have a thick layered shape to achieve a high capacity.

When a high-capacity positive electrode is included, a lithium metal battery having an anode-free structure may experience a disadvantage such as substantial growth of dendrite on a negative electrode. In a lithium metal battery according to some example embodiments of the present disclosure, as discussed above, a combination of the lithiophobic metal layer PML and the protection layer PTL may reduce or suppress dendrites and side reactions caused by lithium metal. Thus, examples of the present disclosure may include a lithium metal battery having a high-capacity positive electrode. A lithium metal battery according to examples of the present disclosure may have a high capacity and desired or improved lifespan characteristics.

### Lithium Metal Battery

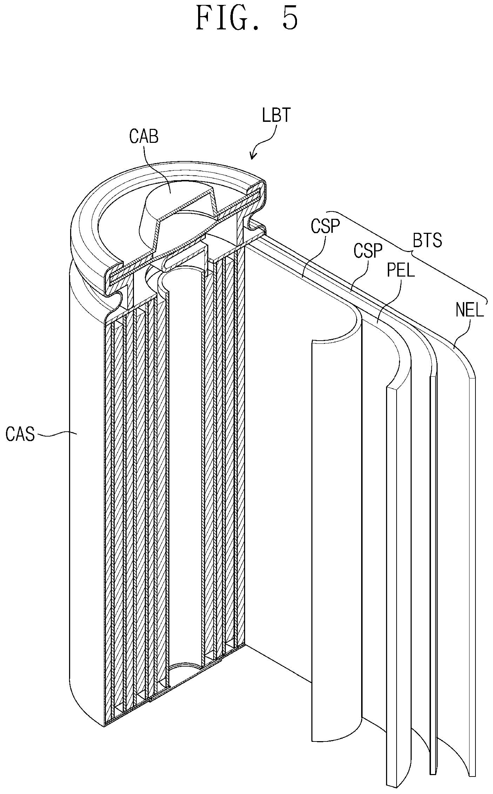

Referring to FIG. 5, a lithium metal battery LBT according to an example embodiment of the present disclosure may include the positive electrode PEL, the negative electrode NEL, and the composite separation layer CSP.

The positive electrode PEL, the negative electrode NEL, and the composite separation layer CSP may be wound or folded to form a battery structure BTS. The battery structure BTS may be accommodated in a battery casing CAS. The battery casing CAS may be injected with an electrolyte solution to form an electrolyte layer. The battery casing CAS may be sealed by a cap assembly CAB to fabricate the lithium metal battery LBT. The battery casing CAS may have a cylindrical shape, but the present disclosure is not limited thereto. For example, the battery casing CAS may have a prismatic shape, a film shape, or the like.

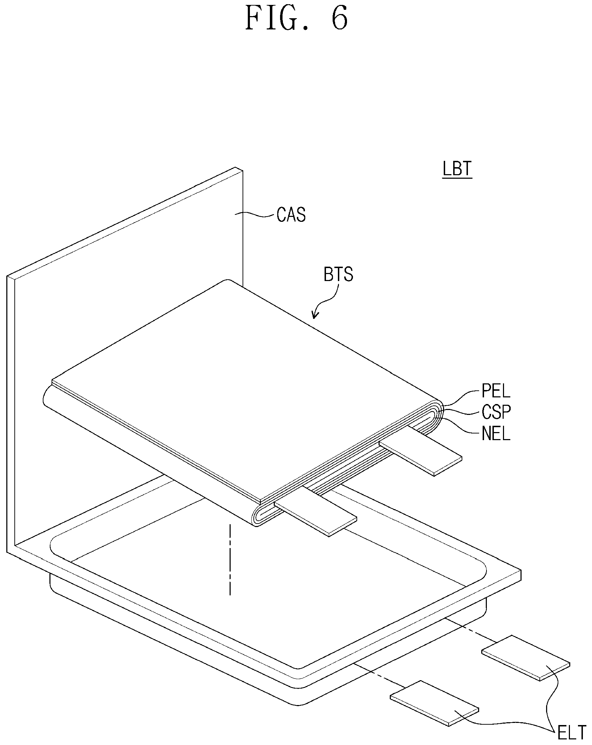

Referring to FIG. 6, a lithium metal battery LBT according to an example embodiment of the present disclosure may include the positive electrode PEL, the negative electrode NEL, and the composite separation layer CSP. The composite separation layer CSP may be disposed between the positive electrode PEL and the negative electrode NEL, and the positive electrode PEL, the negative electrode NEL, and the composite separation layer CSP may be wound or folded to form a battery structure BTS.

The battery structure BTS may be accommodated in a battery casing CAS. An electrode tab ELT may be included and forms an electrical path for outwardly guiding a current generated in the battery structure BTS. The battery casing CAS may be injected with an electrolyte solution to form an electrolyte layer. The battery casing CAS may be sealed to fabricate the lithium metal battery LBT. The battery casing CAS may have a prismatic shape, but the present disclosure is not limited thereto. For example, the battery casing CAS may have a cylindrical shape, a film shape, or the like.

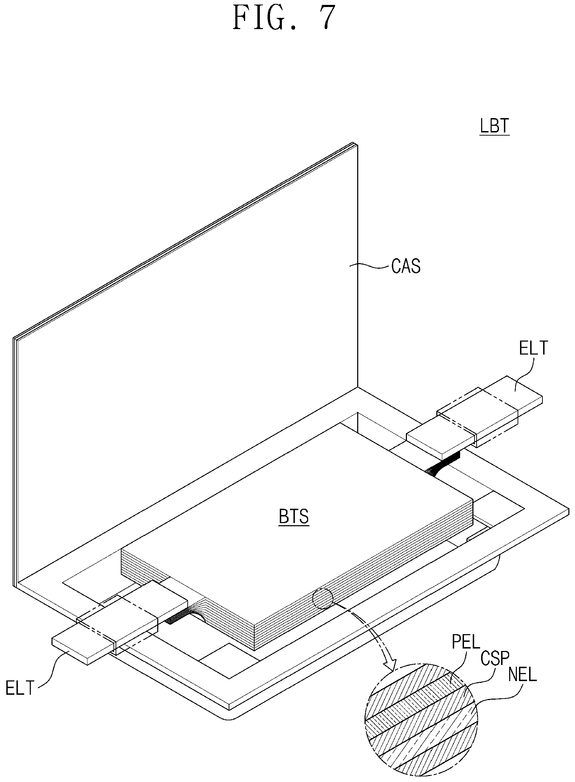

Referring to FIG. 7, a lithium metal battery LBT according to an example embodiment of the present disclosure may include the positive electrode PEL, the negative electrode NEL, and the composite separation layer CSP. The composite separation layer CSP may be disposed between the positive electrode PEL and the negative electrode NEL to form a battery structure BTS.

The battery structure BTS may be stacked in a bi-cell configuration, and accommodated in a battery casing CAS. An electrode tab ELT may be included and constitutes an electrical path for outwardly guiding a current generated in the battery structure BTS. The battery casing CAS may be injected with an electrolyte solution to form an electrolyte layer. The battery casing CAS may be sealed to fabricate the lithium metal battery LBT. The battery casing CAS may have a prismatic shape, but the present disclosure is not limited thereto. For example, the battery casing CAS may have a cylindrical shape, a film shape, or so forth.

A pouch-type lithium metal battery may correspond to the use of a pouch as the battery casing CAS in each of the lithium metal batteries LBT shown in FIGS. 5 to 7. The pouch-type lithium metal battery may include at least one battery structure BTS. After the battery structure BTS is stacked in a bi-cell configuration, the battery structure BTS may be impregnated in an electrolyte layer, accommodated in a pouch, and sealed to fabricate the pouch-type lithium metal battery.

For example, a positive electrode, a negative electrode, and a composite separation layer may be stacked in an electrode assembly and accommodated in a pouch. The electrode assembly may be wound or folded into a jelly-roll form and then accommodated in the pouch. The pouch may be injected with an electrolyte solution to form an electrolyte layer.

Since a lithium metal battery exhibits desired or improved lifespan and high-rate characteristics, the lithium metal battery may be used, for example, in electric vehicles (EV). For example, the lithium metal battery may be used in plug-in hybrid electric vehicles (PHEV). Additionally, the lithium metal battery may be applied in a field requiring large-scale power storage. For example, the lithium metal battery may be included in electric bicycles and power tools.

A plurality of lithium metal batteries may be stacked to form a battery module. A plurality of battery modules may constitute a battery pack. The battery pack may be used in any device that requires high capacity and high power output. For example, the battery pack may be included in laptop computers, smart phones, electric vehicles, and the like. The battery module may include, for example, a plurality of batteries, and a frame that supports the batteries.

The battery pack may include, for example, a plurality of battery modules, and a bus bar that connects the battery modules to each other. The battery module and/or the battery pack may further include a cooling apparatus. A plurality of battery packs may be controlled by a battery management system. The battery management system may include a battery pack and a battery controller connected to the battery pack.

### Fabrication Method

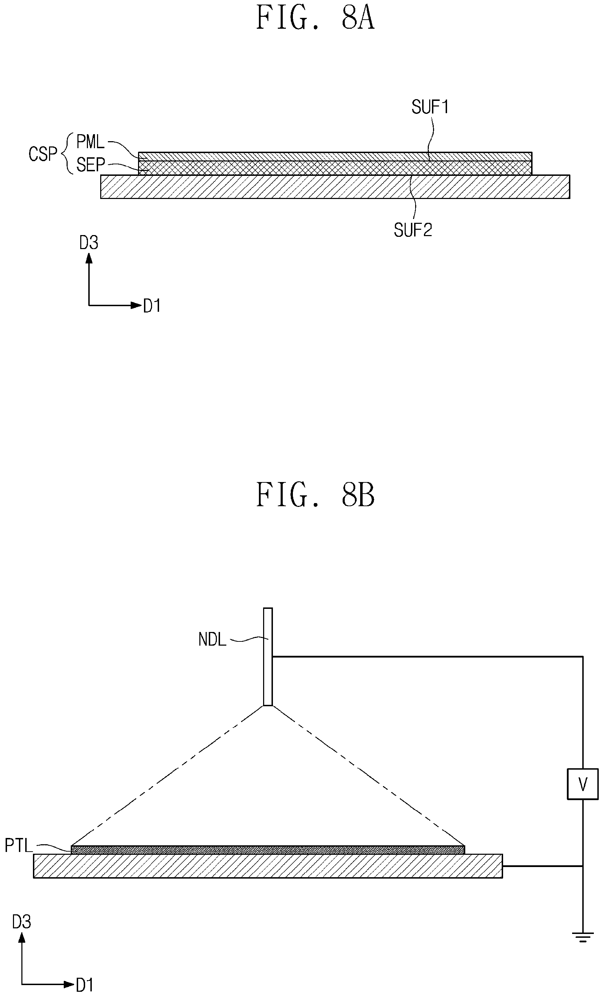

FIGS. 8A to 8E are cross-sectional views illustrating a method of fabricating a lithium metal battery according to some example embodiments of the present disclosure.

Referring to FIG. 8A, a separator SEP may be prepared. The separator SEP may include a porous substrate. The separator SEP may have a first surface SUF 1 and a second surface SUF2 that are opposite to each other.

A lithiophobic metal layer PML may be selectively formed on the first surface SUF 1 of the separator SEP. In an example embodiment, the formation of the lithiophobic metal layer PML may include performing a sputtering process on the first surface SUF1 of the separator SEP. In another example embodiment, the formation of the lithiophobic metal layer PML may include performing a plating process on the first surface SUF1 of the separator SEP.

The lithiophobic metal layer PML may be formed of or include lithiophobic metal. For example, the lithiophobic metal may include at least one of platinum (Pt), aluminum (Al), nickel (Ni), and iron (Fe). In detail, the lithiophobic metal may include platinum (Pt).

The lithiophobic metal layer PML may be formed thinner than the separator SEP. For example, the lithiophobic metal layer PML may be formed to have a thickness in a range of about 10 nm to about 100 nm, but the present disclosure is not limited thereto.

The separator SEP and the lithiophobic metal layer PML may constitute a composite separation layer CSP.

Referring to FIG. 8B, an electrospinning process may be performed to form a protection layer PTL. The formation of the protection layer PTL may include allowing a needle NDL to discharge a polymer solution onto a substrate. The electrospinning process may be performed until a thickness of the protection layer PTL is in a range of about 1 µm to about 100 µm, or about 1 µm to about 50 µm.

The polymer solution may include a polymer, a metal precursor compound, and a solvent. The polymer may be or include a precursor of the porous carbon structure CNF discussed above with reference to FIG. 2. For example, the porous carbon structure (see CNF of FIG. 2) may be derived from the polymer in the polymer solution. The electrospinning process may provide the substrate with the polymer in the form of nano-fiber. The electrospinning process may form a porous structure from the polymer in the form of nano-fiber. The porous structure may constitute a framework of the protection layer PTL.

The metal precursor compound may include lithiophilic metal. For example, the metal precursor compound may include at least one of silver (Ag), gold (Au), copper (Cu), tin (Sn), and bismuth (Bi). The metal precursor compound may include at least one of metal oxide, metal nitride, or a metal organic compound (e.g., metal acetate). The metal precursor compound may have a nano-sized particle shape. The electrospinning process may cause the metal precursor compound to substantially uniformly stick to the porous structure in the protection layer PTL.

In an example embodiment, after the electrospinning process, an annealing process may be performed on the protection layer PTL. The annealing process may carbonize the porous structure to form the porous carbon structure CNF of FIG. 2. The annealing process may be performed by carbonizing the porous structure and reducing the metal precursor compound. Carbothermal reduction or hydrothermal reduction may occur during the annealing process. For example, the annealing process may be performed at a temperature in a range of about 250°C to about 1,200°C under an atmospheric and/or nitrogen environment.

The annealing process may reduce the metal precursor compound to form the lithiophilic particles SNP of FIG. 2. The lithiophilic particles SNP may be substantially uniformly distributed on a surface of the porous carbon structure CNF. The porous carbon structure CNF and the lithiophilic particles SNP may constitute a protection layer PTL.

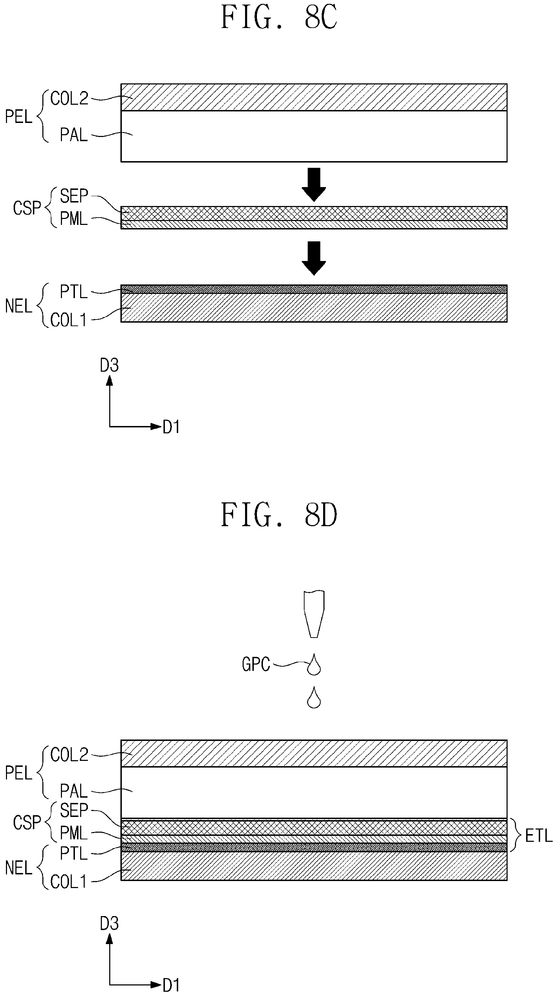

Referring to FIG. 8C, a negative electrode current collector COL1 may be provided thereon with the protection layer PTL which is manufactured in FIG. 8B. The negative electrode current collector COL1 may include at least one of copper (Cu), stainless steel, titanium (Ti), iron (Fe), cobalt (Co), and nickel (Ni). The negative electrode current collector COL1 may have a thickness in a range of about 1 µm to about 20 µm, for example, about 5 µm to about 15 µm or about 7 µm to about 10 µm.

The negative electrode current collector COL1 may be provided thereon with the composite separation layer CSP which is manufactured in FIG. 8A. The composite separation layer CSP may be stacked on the protection layer PTL. The lithiophobic metal layer PML of the composite separation layer CSP may directly face the protection layer PTL of a negative electrode NEL.

A positive electrode PEL may be provided on the composite separation layer CSP. The positive electrode PEL may include a positive electrode current collector COL2 and a positive electrode active material layer PAL. The positive electrode current collector COL2 may provide a reference surface on which the positive electrode active material layer PAL is disposed. The positive electrode current collector COL2 may include, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive electrode active material layer PAL may include a compound (e.g., a lithiated intercalation compound) that reversibly can intercalate and deintercalate lithium. In an example embodiment, the positive electrode active material layer PAL may have a high capacity that is equal to or greater than about 5.0 mAh/cm².

Referring to FIG. 8D, an electrolyte solution GPC may be provided onto a stack of the negative electrode NEL, the composite separation layer CSP, and the positive electrode PEL. The electrolyte solution GPC may fill a space between the negative electrode NEL and the positive electrode PEL. The composite separation layer CSP and the protection layer PTL may be impregnated with the electrolyte solution GPC.

The electrolyte solution GPC may be a precursor for forming an electrolyte layer ETL which is discussed below. The electrolyte solution GPC may include at least one of a liquid electrolyte, a polymer precursor, and a thermal initiator. The polymer precursor may include a cross-linking agent. The cross-linking agent may form a cross-linked polymer through a cross-linking reaction. The polymer precursor may further include a linear polymer and an ionic monomer.

The cross-linking agent, the ionic monomer, the liquid electrolyte, and the linear polymer in the electrolyte solution GPC may be the same, or substantially the same, as those discussed above in the gel-polymer electrolyte GPE.

For example, the cross-linking agent may include two or more double-bond functional groups, and for example, the cross-linking agent may be a (meth)acrylic group. In an example embodiment, the cross-linking agent may include at least one of pentaerythritol tetraacrylate, pentaerythritol tetramethacrylate, trimethylolpropane triacrylate, trimethylolpropane trimethacrylate (TMPTMA), propoxylated (3) trimethylolpropane triacrylate (PO(3)TMPTA), propoxylated (6) trimethylolpropane triacrylate (PO(6)TMPTA), ethoxylated trimethylolpropane triacrylate, di(trimethylolpropane) tetraacrylate, pentaerythritol triacrylate (PETA), propoxylated glyceryl triacrylate, tris(2-hydroxyethyl) isocyanurate triacrylate (THEICTA), and dipentaerythritol pentaacrylate (DPEPA).

For example, the linear polymer may include at least one of polyethylene (PE), styrene-butadiene rubber (SBR), nylon, carboxymethyl cellulose (CMC), polyethylene oxide (PEO), polyvinylidenefluoride (PVDF), vinylidenefluoride-hexafluoropropylene (PVDF-HFP), poly(styrene-b-polyethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), polyethylene glycol (PEG), polyacrylonitrile (PAN), polytetrafluoroethylene (PTFE), polyethylene dioxythiophene (PEDOT), polypyrrole (PPY), polyaniline, and polyacetylene.

In an example embodiment, the providing of the electrolyte solution GPC may include allowing a pouch to receive the stack of the negative electrode NEL, the composite separation layer CSP, and the positive electrode PEL, and filling the pouch with the electrolyte solution GPC.

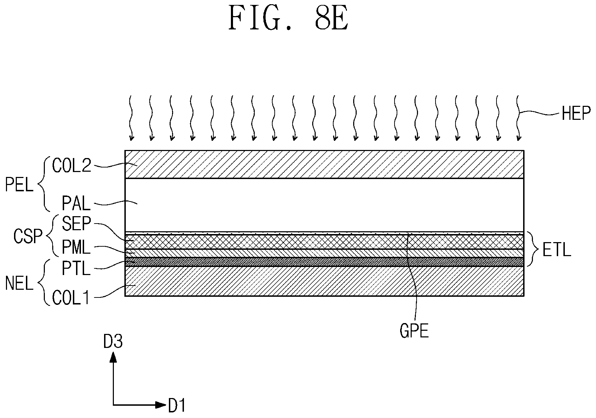

Referring to FIG. 8E, an annealing process HEP may be performed on the stack. The annealing process HEP may form an electrolyte layer ETL from the electrolyte solution GPC. For example, the cross-linking agent and the ionic monomer in the electrolyte solution GPC may be polymerized with each other to form a polymer.

As discussed above with reference to FIG. 2, the electrolyte layer ETL may be in direct contact with the positive electrode active material layer PAL. The electrolyte layer ETL may be in direct contact with the negative electrode current collector COL1. Alternatively, the protection layer PTL may not allow the electrolyte layer ETL to directly contact the negative electrode current collector COL1. The composite separation layer CSP and the protection layer PTL may be impregnated in the electrolyte layer ETL. The electrolyte layer ETL may fill first pores POR1 of the separator SEP. The electrolyte layer ETL may fill second pores POR2 of the separator SEP.

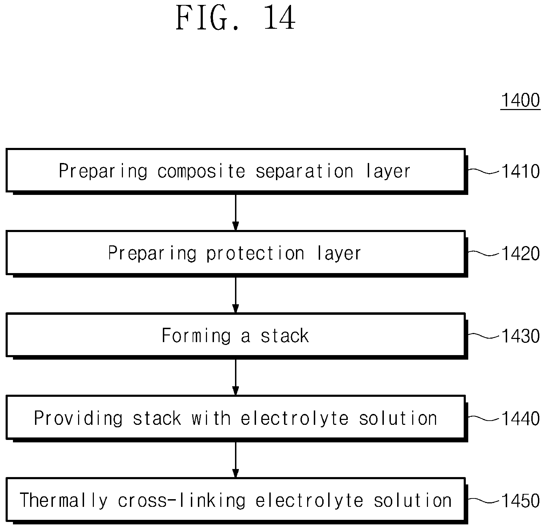

FIG. 14 is a flow chart illustrating a method of fabricating a lithium metal battery, according to an example embodiment. In examples, the method 1400 includes operations 1410-1450. Operation 1410 includes preparing a composite separation layer by forming a lithiophobic metal layer on a first surface of a separator. Operation 1420 includes preparing a protection layer by performing an electrospinning process that uses a mixing solution of a polymer and a metal precursor compound. Operation 1430 includes forming a stack by stacking, e.g., sequentially stacking, a negative electrode current collector, the protection layer, the composite separation layer, and a positive electrode. Operation 1440 includes providing the stack with an electrolyte solution, wherein the composite separation layer is impregnated in the electrolyte solution. Operation 1450 includes thermally cross-linking the electrolyte solution to form an electrolyte layer. In examples, the method 1400 further includes performing on the protection layer an annealing process to carbonate the polymer and to reduce the metal precursor compound.

Herein, the present disclosure is described in detail with reference to some example embodiments. The following example embodiments are provided for illustrative purposes only, and are not to be construed to limit the scope of the present disclosure.

### Embodiment 1

### Electrolyte Solution:

1.0 M of LiPF₆ was dissolved in a non-aqueous organic solvent including ethylene carbonate (EC) and diethyl carbonate (DEC) mixed in a volume ratio of 50:50, thereby preparing a liquid electrolyte. Trimethylolpropane trimethacrylate (TMPTMA) was added as a cross-linking agent to the liquid electrolyte to prepare an electrolyte solution. The TMPTMA was presented in an amount of 3 wt% relative to the total weight of the electrolyte solution.

### Positive Electrode:

Li_{1.04}Ni_{0.8}Co_{0.1}Al_{0.1}O₂ powder and a carbon conductive material (Super-P^{™} commercially available from Timcal Ltd.) were uniformly mixed in a weight ratio of 90:5, and a polyvinylidene fluoride (PVDF) binder solution was added to prepare a positive electrode active material slurry in which the active material, the carbon conductive material, and the binder were mixed in a weight ratio of 90:5:5.

A doctor blade was used to coat the slurry of 15 µm in thickness on an aluminum substrate. The coating layer was dried at 120°C under a reduced pressure, and then roll-pressed to manufacture a positive electrode in the form of sheet. A capacity of the positive electrode was about 5 mAh/cm².

### Composite Separation Layer:

Platinum was used to form a lithiophobic metal layer on a first surface of a polyethylene separator of 5 µm in thickness. The lithiophobic metal layer was formed by a sputtering process using Q150R S commercially available from Quorum Technologies. A sputter current was 66 mA, a sputter time was 120 seconds, and a platinum layer of 25 nm in thickness was deposited.

### Protection Layer:

A planetary centrifugal mixer, as a high-viscosity paste mixer, commercially available from Thiky corporation was utilized to mix 10% of polyacrylonitrile (PAN, Sigma-Aldrich) and N,N-dimethyl formamide (DMF, DUKSAN reagents) with each other for 30 minutes to prepare a polymer solution. 0.5 g of silver oxide (NANOSHEL) was additionally added to the polymer solution, and mixed for 60 minutes.

The polymer solution was electro-spun onto a substrate under the following conditions to produce a protection layer.

Voltage: 18 kV, Spinning distance: 15 cm, Flow rate of spinning solution: 0.5 mL/h, Spinning time: 1 hour 30 minutes

An annealing process was performed on the protection layer. The annealing process was performed in the following order.
i) heated to 270°C at a rate of 10°C per minute
ii) a stabilization process was performed in air for 1 hour at a rate of 0.5°C per minute within a temperature range from 270°C to 300°C
iii) heated to 1,000°C at a rate of 10°C per minute under a nitrogen environment
iv) maintained at 1,000°C for 1 hour under a nitrogen environment

### Lithium Metal Battery:

The composite separation layer and the protection layer were disposed between the positive electrode and a copper foil (negative electrode current collector) of 10 µm in thickness. The stack was received in a pouch, and the electrolyte solution was subsequently injected. The pouch was vacuum sealed to allow the electrolyte solution to impregnate the composite separation layer and the protection layer. Afterwards, a thermal curing process was performed for 2 hours at 70°C to manufacture an electrolyte layer including a gel-polymer electrolyte.

### Embodiment 2

A positive electrode was manufactured to have a capacity of about 6 mAh/cm². Other than this capacity difference, a lithium metal battery was fabricated in the same method as in Embodiment 1.

### Comparative 1

A lithium metal battery was fabricated by omitting the formation of the lithiophobic metal layer and the protection layer from Embodiment 1.

### Comparative 2

A lithium metal battery was fabricated by omitting the formation of the lithiophobic metal layer and the protection layer from Embodiment 2.

Table 1 shows features of Embodiment 1, Embodiment 2, Comparative 1, and Comparative 2.

**Table 1:**

| | Capacity of positive electrode | Composite separation layer | Protection layer |
|---|---|---|---|
| Embodiment 1 | 5 mAh/cm² | 25µm PE separator and 25nm platinum layer | Porous carbon support and silver particle |
| Embodiment 2 | 6 mAh/cm² | 25µm PE separator and 25nm platinum layer | Porous carbon support and silver particle |
| Comparative 1 | 5 mAh/cm² | 25µm PE separator | - |
| Comparative 2 | 6 mAh/cm² | 25µm PE separator | - |

### Evaluation 1: Image of Separator

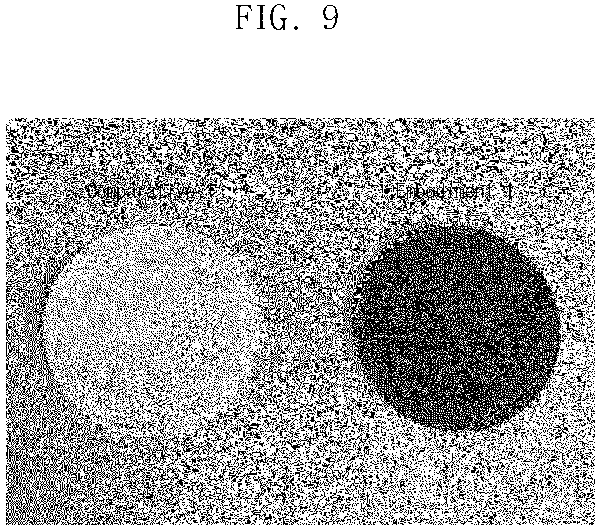

FIG. 9 shows a photograph of the separator and the platinum layer (or the composite separation layer) in Embodiment 1 and a photograph of the separator in Comparative 1. Referring to FIG. 9, it may be ascertained that, in the composite separation layer of Embodiment 1, the platinum layer is substantially uniformly formed on one surface of the separator.

### Evaluation 2: Analysis on Surface of Protection Layer

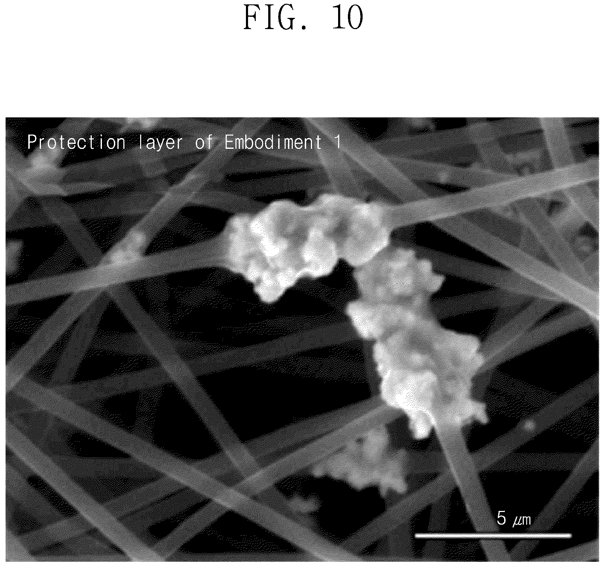

AIS 2000C (scanning electron microscope) commercially available from SERON Company was utilized to execute a surface analysis on the protection layer of Embodiment 1, and the result is shown in FIG. 10. Referring to FIG. 10, it may be ascertained that, in the protection layer of Embodiment 1, nano-particles are favorably attached to a surface of carbon nano-fiber.

### Evaluation 3: Lifespan of High-Capacity Lithium Metal Battery

Lifespan characteristics of Embodiment 1, Embodiment 2, Comparative 1, and Comparative 2 were evaluated under the following conditions.

The lithium metal battery was charged at 25°C with a constant current of 0.1 C rate until a voltage reached 4.25 V (vs. Li), and then the current was cut-off at 0.05 C rate while a voltage was maintained at 4.25 V in a constant voltage mode. Then, the lithium metal battery was discharged with a constant current of about 0.1 C rate until a voltage reached 2.5 V (vs. Li) (formation cycle).

The lithium metal battery was charged at 25°C with a constant current of 0.3 C rate until a voltage reached 4.25 V (vs. Li), and then the current was cut-off at 0.01 C rate while a voltage was maintained at 4.25 V in a constant voltage mode. Then, the lithium metal battery was discharged with a constant current of 0.3 C rate until a voltage reached 2.5 V (vs. Li) (1^{st} cycle). The cycle was repeated under the same condition.

In all charge-discharge cycles, a 10-minute resting time was provided after each charge-discharge cycle. There were measured a positive electrode capacity and Coulombic efficiency during 100 cycles.

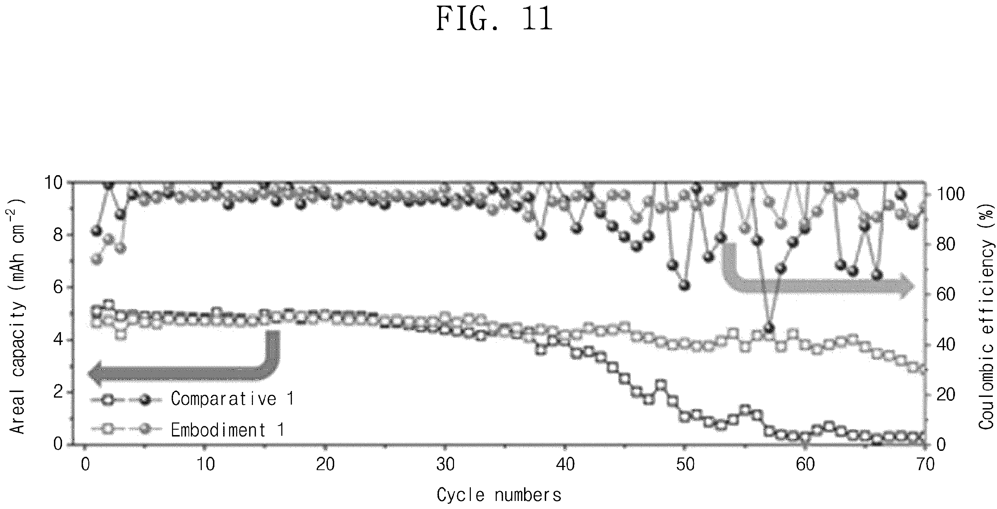

FIG. 11 shows positive electrode capacities and Coulombic efficiencies during 70 cycles of Embodiment 1 and Comparative 1.

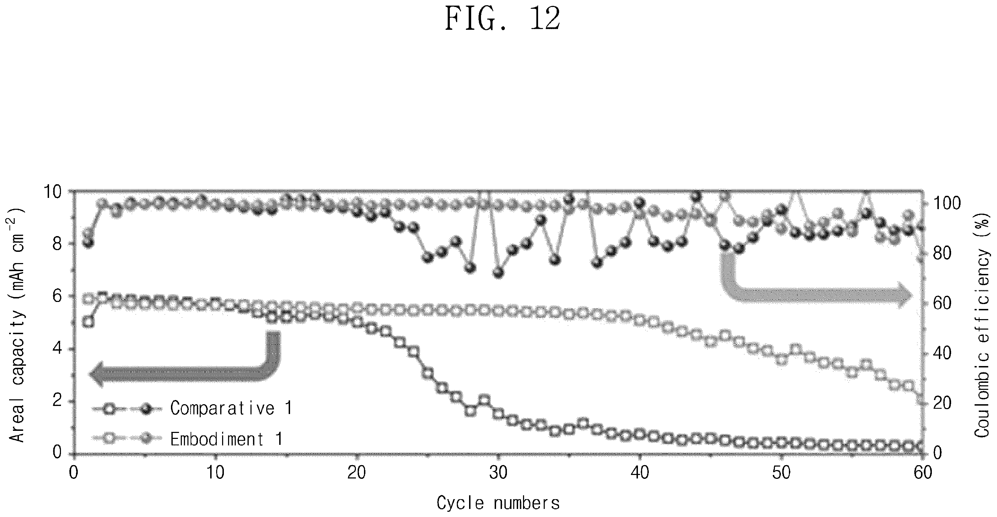

FIG. 12 shows positive electrode capacities and Coulombic efficiencies during 60 cycles of Embodiment 2 and Comparative 2.

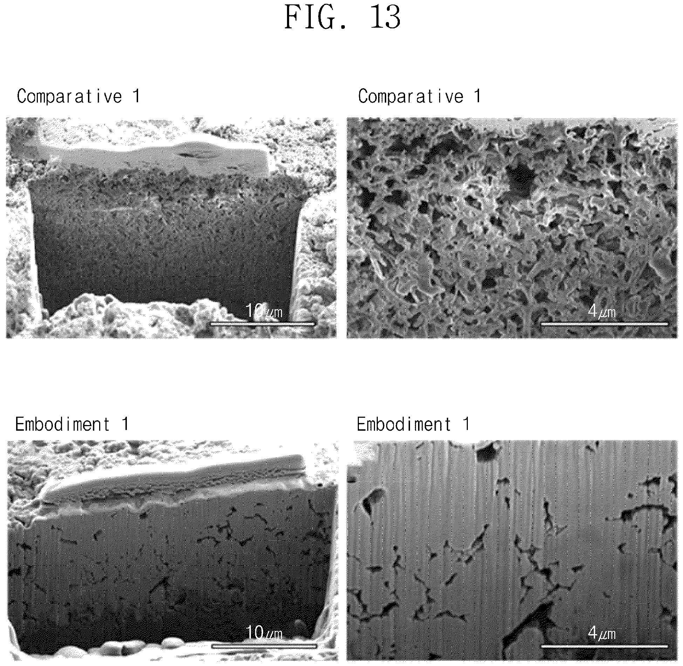

FIG. 13 shows cross-sectional images of negative electrodes of Embodiment 1 and Comparative 1 in the charged state after cycling.

Referring to FIG. 11, it may be observed that the lithium metal battery of Comparative 1 shows a sharp decrease in positive electrode capacity after 40 cycles. It may be ascertained that the lithium metal battery of Comparative 1 shows a sharp decrease in Coulombic efficiency after 40 cycles. In the lithium metal battery of Comparative 1, the repeated cycling may lead to an excessive formation of dendrites to cause a rapid decrease in battery lifespan.

In contrast, it may be found that the lithium metal battery of Embodiment 1 shows almost no decrease in positive electrode capacity and stable maintenance of Coulombic efficiency during 70 cycles. It may be confirmed that the lithium metal battery of Embodiment 1 has a desired or improved lifespan due to the reduction or suppression of dendrite formation.

Referring to FIG. 12, it may be observed that the lithium metal battery of Comparative 2 shows a sharp decrease in positive electrode capacity after 20 cycles. It may be found that the lithium metal battery of Comparative 2 shows a sharp decrease in Coulombic efficiency after 20 cycles. In the lithium metal battery of Comparative 2, the repeated cycling may lead to an excessive formation of dendrites to cause a rapid decrease in battery lifespan. It may be ascertained that, compared to Comparative 1 of FIG. 11, an increase in positive electrode capacity causes a rapid decrease in battery lifespan.

In contrast, it may be found that the lithium metal battery of Embodiment 2 shows stability in the positive electrode capacity during 40 cycles and stability in Coulombic efficiency during 60 cycles. It may be confirmed that the lithium metal battery of Embodiment 2 has a desired or improved lifespan due to the reduction or suppression of dendrite formation even while having a high capacity.

Referring to FIG. 13, it may be observed that the lithium metal battery of Comparative 1 has an excessive formation of dendrites on the negative electrode. In contrast, it may be ascertained that, even after cycling, there is almost no dendrite formation on the negative electrode of the lithium metal battery of Embodiment 1.

In a lithium metal battery according to examples of the present disclosure, a composite separation layer including an expansion buffer layer may be used to effectively accommodate a variation in width of a lithium deposition layer. Despite the variation in width of the lithium deposition layer, the lithium metal battery according to examples of the present disclosure may stably maintain an interface between an electrolyte layer and a negative electrode. Accordingly, examples of the present disclosure may reduce or suppress the formation of lithium dendrites, and improve battery lifespan characteristics.

## Claims

1. A lithium metal battery, comprising:
a negative electrode current collector;
a protection layer on the negative electrode current collector, wherein the protection layer comprises a porous carbon structure and a plurality of lithiophilic particles dispersed in the porous carbon structure;
a composite separation layer on the protection layer, wherein the composite separation layer comprises a separator and a lithiophobic metal layer on a first surface of the separator, wherein the lithiophobic metal layer faces the protection layer; and
a positive electrode on the composite separation layer,
wherein the positive electrode comprises a positive electrode current collector and a positive electrode active material layer on the positive electrode current collector,
wherein the positive electrode active material layer comprises a positive electrode active material represented by LiₐNi_{1-b-c}Co_{b}X_{c}O_{2-d}, where 0.90≤a≤1.8, 0≤b≤0.2, 0≤c≤0.2, 0.8 ≤1-b-c≤0.99, and 0≤d≤0.2,
wherein X comprises at least one of Al and Mn.

2. The lithium metal battery of claim 1, wherein a porosity of the porous carbon structure is in a range of from about 40% to about 80%.

3. The lithium metal battery of claim 1 or 2, wherein the lithiophilic particles comprise at least one of silver (Ag), gold (Au), copper (Cu), tin (Sn), and bismuth (Bi).

4. The lithium metal battery of any one of claims 1 to 3, wherein a thickness of the lithiophobic metal layer is in a range of from about 10 nm to about 100 nm.

5. The lithium metal battery of any one of claims 1 to 4, wherein the lithiophobic metal layer comprises at least one of platinum (Pt), aluminum (Al), nickel (Ni), and iron (Fe).

6. The lithium metal battery of any one of claims 1 to 5, wherein:
the lithiophobic metal layer is configured to disperse lithium ions, and
the protection layer is configured to substantially uniformly plate the lithium ions.

7. The lithium metal battery of any one of claims 1 to 6, further comprising a lithium deposition layer between the negative electrode current collector and the protection layer.

8. The lithium metal battery of any one of claims 1 to 7, wherein the protection layer further comprises lithium plated in the porous carbon structure.

9. The lithium metal battery of any one of claims 1 to 8, wherein the positive electrode active material layer has a capacity in a range of from about 5.0 mAh/cm² to about 10.0 mAh/cm².

10. The lithium metal battery of any one of claims 1 to 9, further comprising an electrolyte layer between the negative electrode current collector and the positive electrode active material layer,
wherein the electrolyte layer comprises a gel-polymer electrolyte.

11. The lithium metal battery of claim 10, wherein:
the gel-polymer electrolyte substantially fills first pores of the separator, and
the gel-polymer electrolyte substantially fills second pores of the porous carbon structure.

12. A method of fabricating a lithium metal battery, the method comprising:
preparing a composite separation layer by forming a lithiophobic metal layer on a first surface of a separator;
preparing a protection layer by performing an electrospinning process that uses a mixing solution of a polymer and a metal precursor compound;
forming a stack by stacking a negative electrode current collector, the protection layer, the composite separation layer, and a positive electrode;
providing the stack with an electrolyte solution, wherein the composite separation layer is impregnated in the electrolyte solution; and
thermally cross-linking the electrolyte solution to form an electrolyte layer.

13. The method of claim 12, further comprising performing, on the protection layer, an annealing process to carbonate the polymer and to reduce the metal precursor compound.
